# EUROPÄISCHE PATENTANMELDUNG

(11) **EP 1 484 514 A1**
(43) Veröffentlichungstag der Anmeldung: **08.12.2004**
(21) Anmeldenummer: 03012957.1
(22) Anmeldetag: 06.06.2003
(51) Int. Cl.: F16B 12/00

(54) **Element zur Anbringung einer Tafel an einem Regal**

(71) Anmelder: Kaufmann, Ralf, 55129 Mainz (DE); Zizmann, Marcus, 65527 Niedernhausen (DE)
(72) Erfinder: Kaufmann, Ralf, 55129 Mainz (DE); Zizmann, Marcus, 65527 Niedernhausen (DE)
(74) Vertreter: Quermann, Helmut, Dipl.-Ing.

(57) **Zusammenfassung**

Die Erfindung schlägt einen Träger (1) für zwei miteinander zu verbindende Teile (13, 14) mit folgenden Merkmalen vor:
- einen ersten flachen Abschnitt (10) zur Befestigung mit einem (14) der beiden Teile,
- einen zweiten aus der Ebene des flachen Abschnitts ragenden Abschnitt (11), der zueinander abgewinkelte Abschnittsteile aufweist, zur Befestigung mit dem anderen (13) der beiden Teile,
- eine flexible Verbindung (5) zwischen dem ersten Abschnitt (10) und einem Abschnittsteil (9) des zweiten Abschnitts.

Die Erfindung schlägt ferner ein Befestigungssystem zum Anbringen eines ersten Teils, insbesondere einer Tafel (13), unter einem Winkel an einem zweiten Teil, insbesondere einem Regalboden (14), unter Verwendung mindestens eines vorbezeichneten Trägers (1) vor.

## Beschreibung

Die Erfindung betrifft einen Träger für zwei miteinander zu verbindende Teile, sowie ein Befestigungssystem unter Verwendung eines oder mehrerer solcher Träger.

Im Zusammenhang mit der Werbung in Einkaufsmärkten, insbesondere Supermärkten, ist man bestrebt, die in Regalen befindlichen Waren dem interessierten Kaufpublikum nachhaltig anzupreisen. Man ordnet deshalb senkrecht zur Erstreckung des Ganges, der an den Regalen vorbeiführt, Tafeln oder dergleichen an, die am Regal befestigt sind. Die Tafeln tragen Werbeinformationen, insbesondere betreffend die im Regal befindlichen Produkte.

In der Praxis gibt es unterschiedliche Befestigungssysteme zum Anbringen einer Tafel an einem Regalboden. In aller Regel sind die Befestigungssysteme sehr aufwendig und zeichnen sich durch viele Einzelteile aus, die insbesondere geklemmt oder verschraubt werden müssen. Die Befestigungssysteme nehmen einen erheblichen Raum ein und stehen unästhetisch aus dem Raumregal hervor. Dies stört erheblich den Gesamteindruck und beeinträchtigt damit den Werbeeffekt. Abgesehen hiervon sind derartige Befestigungssysteme in der Herstellung teuer. Auch die Kosten im Zusammenhang mit der zeitaufwendigen Anbringung der Befestigungssysteme schlagen negativ zu Buche.

So ist es beispielsweise bekannt, am Regal eine U-förmige Schiene anzubringen, die im Bereich der aufeinander zu gewandten Schenkel des U-förmigen Profils mit einem fischgrätartigen Einsatz versehen ist. Wird die Tafel in die U-förmige Schiene eingesteckt, ist sie klemmend gehalten. Um eine einigermaßen sichere Verbindung zu gewährleisten, muss die Schiene eine relativ große Länge aufweisen, so dass sie die Tafel über eine entsprechend große Länge hält. Dies ist aufwendig und kostenintensiv bezüglich der Herstellung des Befestigungssystems.

Aufgabe der vorliegenden Erfindung ist es, einen Träger und ein Befestigungssystem anzugeben, welcher bzw. welches es erlaubt, auf einfachste Art und Weise zwei Teile zueinander zu positionieren, insbesondere eine Tafel an einem Regalboden anzubringen. In einer bevorzugten Ausgestaltung soll die Tafel senkrecht zum Regalboden angeordnet sein, somit senkrecht zur Richtung des vor dem Regal angeordneten Ganges der Verkaufsstätte.

Zur Lösung dieser Aufgabe schlägt die Erfindung einen Träger für zwei miteinander zu verbindende Teile mit folgenden Merkmalen vor:
- einen ersten flachen Abschnitt zur Befestigung mit einem der beiden Teile,
- einen zweiten, aus der Ebene des flachen Abschnitts ragenden Abschnitt, der zueinander abgewinkelte Abschnittsteile aufweist, zur Befestigung mit dem anderen der beiden Teile,
- eine flexible Verbindung zwischen dem ersten Abschnitt und einem Abschnittsteil des zweiten Abschnitts.

Die beiden Teile, insbesondere der Regalboden und die Tafel, lassen sich somit mittels eines äußerst einfach gestalteten Trägers miteinander verbinden. Hierbei sind, wenn die Teile, d. h. die Tafel oder der Regalboden, keine Mittel zum Befestigen des Trägers an den Teilen aufweisen, diese Befestigungsmittel dem Träger zugeordnet. Die Befestigungsmittel können unterschiedlich ausgestaltet sein. Der Träger kann mit den Befestigungsmitteln versehen sein oder es weist der Träger selbst die Funktion des Befestigungsmittels auf, wie es später beschrieben ist.

Der erfindungsgemäße Träger ist somit im Wesentlichen durch zwei flache Ausgangsabschnitte gebildet, wobei der eine Abschnitt der Befestigung des einen Teils und der andere Abschnitt dem Befestigen des anderen Teils dient. Der eine Abschnitt kann in seiner flächigen Ausbildung verbleiben, da er der Verbindung mit dem Regalboden, somit einer flächigen Gegenfläche dient. Der zweite Abschnitt weist mindestens zwei abgewinkelte Abschnittsteile auf, die der Verbindung mit dem zweiten Teil, insbesondere der Tafel, im Bereich zweier Flächen der Tafel dienen, die unter einem Winkel zueinander angeordnet sind. Dies gewährleistet eine hervorragende Stabilität der Verbindung zwischen den Teilen, und insbesondere der Verbindung zwischen dem Träger und dem zweiten Teil, insbesondere der Tafel. Die flexible Verbindung zwischen dem ersten Abschnitt und einem Abschnittsteil des zweiten Abschnitts ermöglicht es, diesen Abschnitt und dieses Abschnittsteil in der gewünschten Position zueinander anzuordnen und insbesondere aus dem flächigen Träger zu bilden.

Unter dem Aspekt der Optimierung der Herstellungskosten wird es als besonders vorteilhaft angesehen, wenn der Träger einstückig ausgebildet ist. Es ist dabei durchaus denkbar ihn aus mehreren flächigen Abschnitten bzw. Abschnittsteilen zu bilden, die beispielsweise mittels eines Gewebeklebebandes miteinander verbunden sind.

Für den Träger kommen die unterschiedlichsten Materialien in Frage, beispielsweise harte und elastische Materialien. Gedacht ist insbesondere an Kunststoffe (z. B. PP, PVC, PPT, usw.), Gummi, Kautschuk, geschäumte Kunststoffe und Folien, Kohlefaserverbindungen, Holz und Papierprodukte, Papyrus, Metalle (z. B. Aluminium, Stahl, Kupfer). Denkbar sind auch Gewebe, nämlich sämtliche Gewebe aus Metall und Kunststoff, Gewebe aus Baumwolle, Viskose, Seide usw. Daneben sind alle Verbindungen aus den oben genannten Materialien (z. B. Gewebe in Kunststoff) als Material für den Träger denkbar.

Sofern die Mittel zum Befestigen der Abschnitte an den beiden Teilen mit dem Träger verbunden sind, bzw. Bestandteil des Trägers sind, kommen gleichfalls die unterschiedlichsten Varianten in Frage. Die Mittel zum Befestigen können beispielsweise als auf den Träger aufgebrachte Haftbeschichtung ausgebildet sein, insbesondere alle Arten von organischem und nicht organischem Kleber, geschäumte Kleber oder Klebekugeln (3M), alle Arten von Haftmitteln, Klettverbindungen, die mit dem Träger verbunden sind, Magnetbeschichtungen usw.. Andererseits ist es durchaus denkbar, den Träger selbst als Klettgewebe auszubilden. Dieses Klettgewebe ist mit den erfindungsgemäßen Abschnitten bzw. Abschnittsteilen versehen, die mit an den beiden Teilen, insbesondere dem Regalboden und dem Schild angebrachten Gegengeweben in Wirkverbindung bringbar sind. Bei dem Träger kann es sich ferner um ein Klebeband, ein Klebeschaumband, Klettband usw. handeln. Ein Klettgewebe ist entsprechend der gewünschten Form des Trägers zu stanzen.

Grundsätzlich können die Mittel zum Befestigen der Abschnitte auf einer oder beiden Seiten des jeweiligen Abschnitts angebracht sein. Es wird allerdings als besonders vorteilhaft angesehen, wenn die Mittel zum Befestigen, insbesondere die Haftbeschichtung, nur auf einer Seite des Trägers angeordnet sind. Hierdurch kann der Träger in einem einfachen Arbeitsgang mit dem Mittel zu dessen Befestigung, insbesondere der Haftbeschichtung, versehen werden.

Als besonders vorteilhaft, insbesondere unter Herstellungs- und Lagerungsaspekten wird es angesehen, wenn der hergestellte Träger als flächiges Gebilde gestaltet ist. Es können so eine Vielzahl von Trägern auf kleinstem Raum angeordnet werden, so dass für den Vertrieb und die Lagererhaltung einer großen Stückzahl von Trägern nur wenig Raum benötigt wird. Erst vor Ort, somit erst am Regal, wird der Träger in die gewünschte Form zum Anbringen am Regalboden und dem Befestigen der Tafel am Träger gefaltet, nachdem zuvor, sofern der Träger mit einer Klebung versehen ist, eine Abdeckfolie von der Klebeschicht entfernt worden ist.

Die Anzahl der zum Befestigen des Teiles, insbesondere der Tafel, erforderlichen Träger bemisst sich nach der Größe des Teiles bzw. der Tafel. In aller Regel werden zum Anbringen einer Tafel am Regal, insbesondere im Bereich zweier Regalböden, zwei Träger ausreichend sein, wobei die Träger an den übereinander angeordneten Regalböden befestigt werden und die Tafel im Bereich der den Trägern zugewandten Stirnfläche im oberen und unteren Bereich der Tafel halten.

Unter dem Aspekt der in das zweite Teil, insbesondere die Tafel, einzuleitenden Haltekräfte wird es als besonders vorteilhaft angesehen, wenn der zweite Abschnitt in Form eines U abgewinkelte Abschnittsteile aufweist, wobei das die äußeren Abschnittsteile verbindende Abschnittsteil mit dem ersten Abschnitt verbunden ist. Bei dieser Gestaltung findet eine Verbindung des Trägers mit der Tafel im Bereich der drei Abschnittsteile statt, die somit die Tafel stirnseitig und auf den abgewandten Seiten kontaktieren.

Die Aufgabe wird ferner gelöst, durch ein Befestigungssystem zum Anbringen eines ersten Teils, insbesondere einer Tafel, unter einem Winkel an einem zweiten Teil, insbesondere einem Regalboden unter Verwendung mindestens eines der vorbeschriebenen Träger. Vorteilhaft sind die beiden Teile unter einem rechten Winkel zueinander angeordnet.

Weitere Merkmale der Erfindung sind in den Unteransprüchen, der Beschreibung der Figuren und in den Figuren selbst dargestellt, wobei bemerkt wird, dass alle Einzelmerkmale und alle Kombinationen von Einzelmerkmalen erfindungswesentlich sind.

In den Figuren ist die Erfindung an Hand mehrerer Ausführungsbeispiele für den Anwendungsfall der Anbringung einer Tafel an ein Regal näher erläutert, ohne auf diesen beschränkt zu sein. Es zeigt:
- Figur 1: eine Draufsicht einer bevorzugten Gestaltung des Trägers,
- Figur 2: eine Seitenansicht des in Figur 1 gezeigten Trägers,
- Figur 3: eine Draufsicht des Trägers bei teilweise abgewinkelt an geordneten Abschnittsteilen des zweiten Abschnittes,
- Figur 4: den Träger in einer Position der Abschnittsteile gemäß Figur 3, allerdings bei abgewinkelter Anordnung der Abschnitte des Trägers,
- Figur 5: eine erste Variante eines Befestigungssystems unter Verwendung zweier Träger, die der Befestigung einer Tafel an zwei Regalböden dienen, in Längsrichtung des Regals gesehen,
- Figur 6: entsprechend der Darstellung in Figur 5 eine zweite Variante des Befestigungssystems,
- Figur 7: entsprechend der Darstellung in Figur 5 eine dritte Variante des Befestigungssystems,
- Figur 8: entsprechend der Darstellung in Figur 5 eine vierte Variante des Befestigungssystems,
- Figuren 9 bis 11: in einer Draufsicht gemäß Figur 1 modifizierte Ausführungsformen des Trägers,
- Figur 12: in einer Draufsicht gemäß Figur 1 einen weiter modifizierten Träger mit verlängertem mittleren Abschnittsteil und
- Figur 13: ein Befestigungssystem unter Verwendung eines Trägers, wie er in Figur 12 veranschaulicht ist.

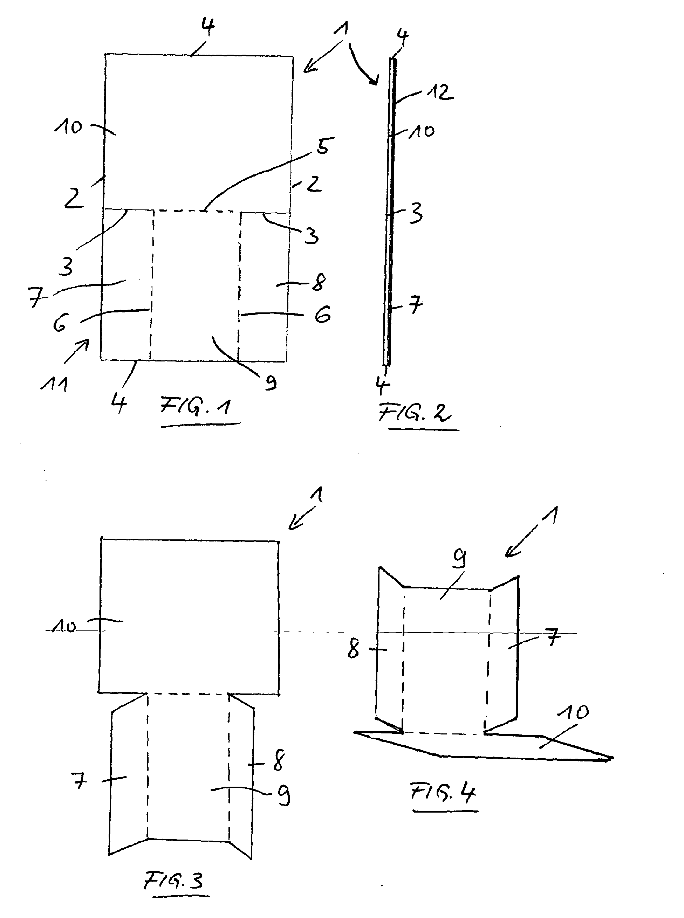

Der in den Figuren 1 bis 4 veranschaulichte Träger besteht aus einer dünnwandigen Kunstsoffplatte; die rechteckig ausgebildet ist. Deren Länge befrägt beispielsweise 5 cm und deren Breite beispielsweise 2,5 cm. Etwa im Bereich der halben Länge ist der Träger 1 mit sich senkrecht zu den Längsseiten 2 erstreckenden Einschnitten 3 versehen, die sich jeweils nur etwa über ¼der Länge der Schmalseiten 4 des Trägers 1 erstrecken. Entlang der die beiden Einschnitte 3 verbindenden Gerade 5 ist der Träger 1 mit einer strichliert dargestellten Nut oder Schwächung versehen, so dass der Träger 1 in diesem Bereich geknickt werden kann. Entsprechend weist der Träger 1 entlang der beiden Geraden 6 gleichfalls Nuten bzw. Schwächungen auf, so dass die zwischen der jeweiligen strichliert dargestellten Schwächungslinie 6 und der dieser zugewandten Längsseite 2 des Trägers 1 gebildeten Abschnittsteile 7 bzw. 8 aus der Ebene des zwischen diesen Abschnittsteilen gebildeten Abschnittsteiles 9 gebogen werden können. Der Träger 1 ist durch den ersten Abschnitt 10 und den zweiten Abschnitt 11 gebildet. Hierbei bilden die Abschnittsteile 7 bis 9 den zweiten Abschnitt 11. Verbunden ist der zweite Abschnitt 11 mit dem ersten Abschnitt 10 mittels des Abschnittsteiles 9 im Bereich der Schwächungslinie 5.

Figur 2 veranschaulicht, dass auf einer Seite des Trägers 1 eine Klebschicht 12 als durchgängige Klebefläche aufgebracht ist. Diese ist vor dem Anbringen des Trägers 1 mit einer nicht veranschaulichten Abdeckfolie versehen, die kurz vor dem Anbringen des Trägers 1 an einem Teil, insbesondere einem Regalboden oder einer Tafel, von der Klebeschicht abgezogen wird. Anschließend erfolgt das Formen des Trägers 1.

Figur 3 verdeutlicht das Ausschwenken der Abschnittsteile 7 und 8 aus der Ebene des ersten Abschnittes 10 und des Abschnittsteiles 9. Hierbei weisen die Abschnittsteile 7 und 8 in dieselbe Richtung.

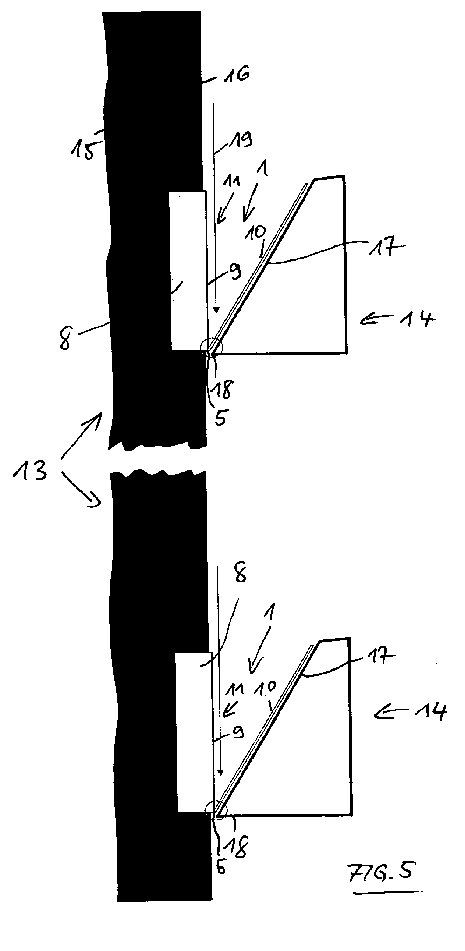

Figur 4 verdeutlicht das anschließende Schwenken des ersten Abschnitts 10 bezüglich des Abschnittsteiles 9. Hierbei können die Abschnittsteile 7 und 8 vom ersten Abschnitt 10 weggerichtet sein, wie es in Figur 4 veranschaulicht ist, oder aber auch zum ersten Abschnitt 10 hin.

Figur 5 veranschaulicht die Befestigung einer Tafel 13 an zwei Regalböden 14 mittels zweier Träger 1. Gezeigt ist nur ein Randbereich der Tafel 13, die beispielsweise als viereckige Platte ausgebildet ist, die mit einer Werbeaussage bedruckt ist. Auf der den Regalböden 14 zugewandten Seite weist die Tafel 13 somit zwei seitliche Flächen 15, von denen nur eine sichtbar ist, sowie eine senkrecht zu diesen angeordnete Stirnfläche 16 auf.

Bei der Ausführungsform nach Figur 5 weist der jeweilige Regalboden 14 eine dem Betrachter zugewandte schräge Fläche 17 auf, der beispielsweise eine sich in Längsrichtung des Regalbodens 14 erstreckende Tasche zugeordnet ist, die der Aufnahme eines Preisschildes oder dergleichen dient.

Zum Befestigen der Tafel 13 an den beiden Regalböden 14 wird, ausgehend von der Gestalt des Trägers 1 gemäß Figur 4, zunächst der erste Abschnitt 10 des jeweiligen Trägers 1 auf die schräge Fläche 17 des jeweiligen Regalbodens 14 aufgeklebt, derart, dass sich die Knickstelle zwischen den beiden Abschnitten 10 und 11 unten befindet und in etwa mit der Unterkante 18 des jeweiligen Regalbodens 14 abschließt. Der zweite Abschnitt 11 des jeweiligen Trägers 1 ist, hiervon ausgehend, nach oben gerichtet, und es weisen die Abschnittsteile 7 und 8 vom ersten Abschnitt 10 weg. Die Stirnfläche 16 der Tafel 13 wird in Kontakt mit dem Abschnittsteil 9 des zweiten Abschnitts 11 gebracht und haftet an deren Klebeschicht 12. Es werden dann die Abschnittsteile 7 und 8 gegen die seitlichen Flächen 15 der Tafel 13 gedrückt und mit deren Klebeschicht 12 die seitlichen Flächen 15 kontaktiert. Durch die so angebrachten beiden Träger 1 ist die Tafel 13 fest mit den beiden Regalböden 14 verbunden. Der Pfeil 19 verdeutlicht die Richtung der Schwerkraft. Das Gewicht der Tafel 13 führt dazu, dass über den zweiten Abschnitt 11 der erste Abschnitt 10 fest auf den jeweiligen Regalboden 10 gedrückt wird.

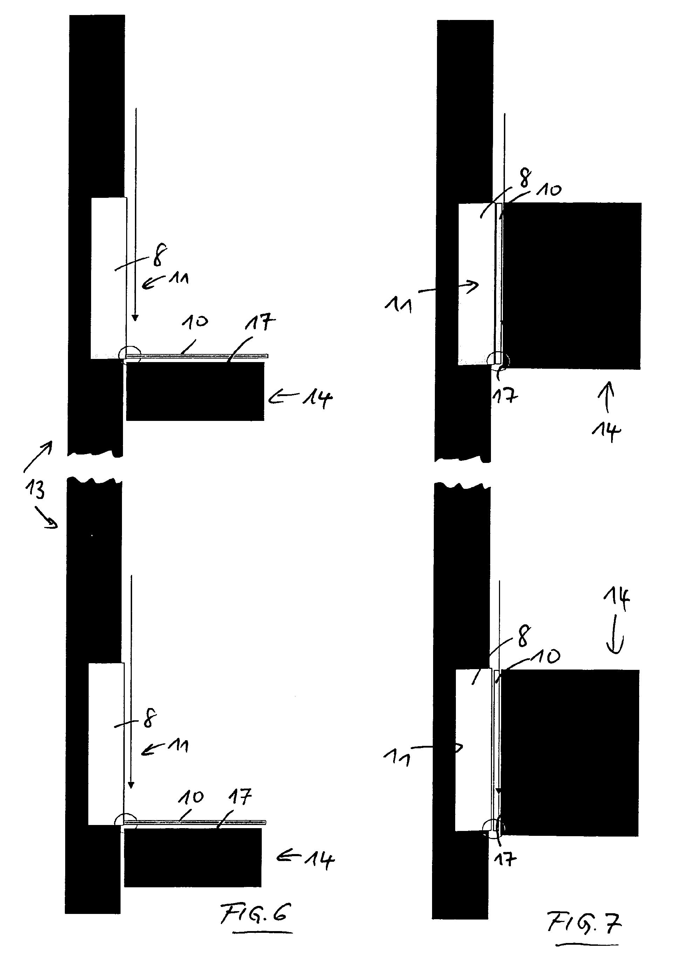

Die Ausführungsform nach der Figur 6 unterscheidet sich von derjenigen nach der Figur 5 nur dadurch, dass der jeweilige Regalboden 14 in Art eines Brettes mit horizontaler Fläche 17 zur Aufnahme des jeweiligen ersten Abschnittes 10 des Trägers 1 versehen ist.

Die Ausführungsform nach der Figur 7 unterscheidet sich von derjenigen nach der Figur 5 dadurch, dass der jeweilige Regalboden 14 Kastenform aufweist und die dort senkrecht angeordnete Fläche 17 der Verbindung mit dem ersten Abschnitt 10 dient.

Die Ausführungsform nach der Figur 8 unterscheidet sich von derjenigen nach der Figur 6 dadurch, dass, ausgehend von dem ersten Abschnitt 10 des jeweiligen Trägers 1, der zweite Abschnitt 11 nicht nach oben, sondern nach unten gerichtet ist. Bei dieser Variante ist der Träger 1 beidseitig mit der Klebeschicht 12 versehen, oder aber im Bereich des ersten Abschnittes 10 auf einer anderen Seite als im Bereich des zweiten Abschnittes 11.

Überdies dienen die in den Figuren 5 bis 8 gezeigten Kreise nur der besseren Verdeutlichung der Knickstelle der beiden Abschnitte 10 und 11 des jeweiligen Trägers 1. In den schematischen Darstellungen ist der mit dem jeweiligen Regalboden 14 verbundene erste Abschnitt 10 des Trägers 1 in geringfügigem Abstand zum Regalboden 14 gezeigt.

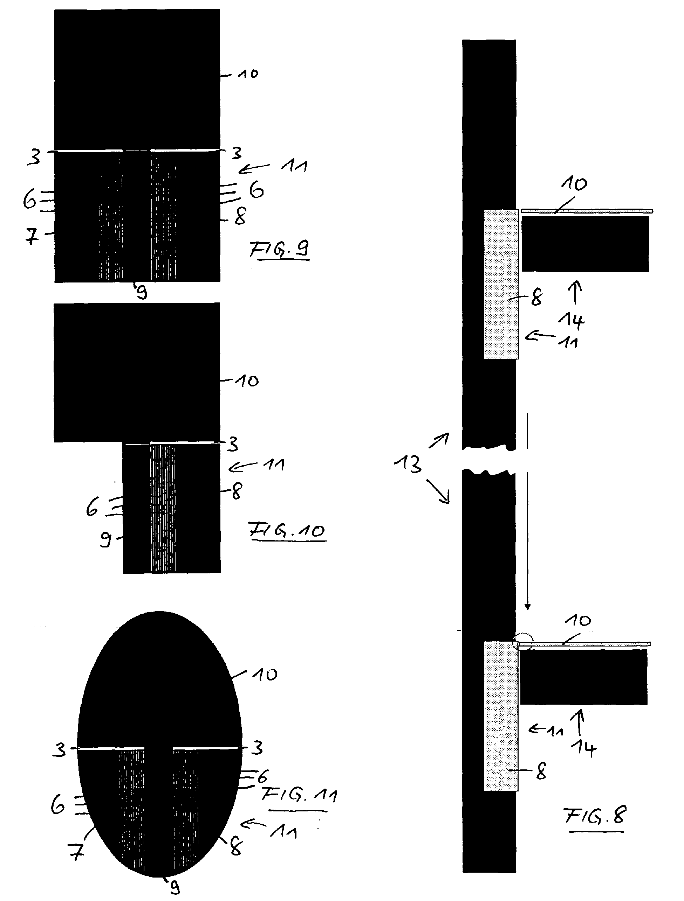

Die Figuren 9 bis 12 zeigen Varianten des Trägers 1:

Bei der Ausführungsform nach der Figur 9 weist der jeweilige Einschnitt 3 des Trägers 1 eine größere Länge auf, und es sind im Bereich jedes Einschnittes 3 mehrere Knickgeraden 6 nebeneinander angeordnet. Diese Gestaltung ermöglicht es, den Träger 1 für unterschiedlich breite Tafeln 13 zu verwenden. Entsprechend der Stärke der Tafel wird der zweite Abschnitt 11 im Bereich der entsprechenden Knicklinie abgebogen, so dass der Abstand der Knicklinien, die das Abschnittsteil 9 bilden, geringfügig größer ist als die Stärke der Tafel 13.

Die Aüsführungsform nach der Figur 10, die sich an die Gestaltung nach Figur 9 anlehnt, verdeutlicht einen Träger 1, der kein Abschnittsteil 7 aufweist. Die Tafel 13 wird somit nur im Bereich der Abschnittsteile 8 und 9, somit im Bereich einer Seitenfläche 15 und der Stirnfläche 16 gehalten.

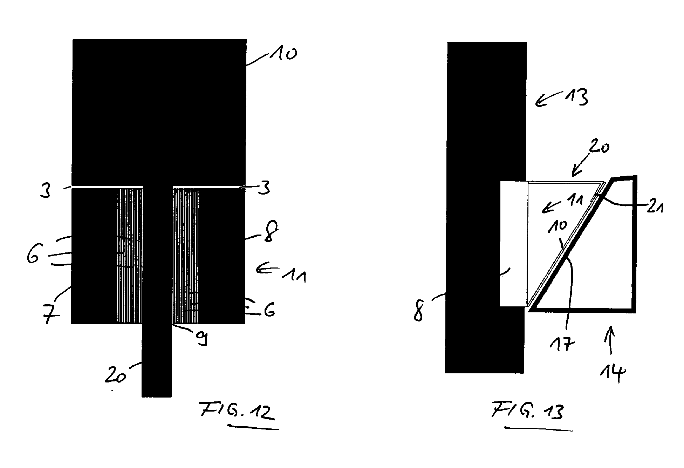

Das Ausführungsbeispiel gemäß Figur 11 orientiert sich an demjenigen der Figur 9, wobei die Form des Trägers 1 nicht rechteckig, sondern oval ist.

Bei dem Ausführungsbeispiel nach Figur 12, das sich an dem in Figur 9 Dargestellten orientiert, ist das Abschnittsteil 9 über die angrenzenden Abschnittsteile 7 und 8 hinaus verlängert und dieser verlängerte Abschnitt 20 gleichfalls mit einer Klebeschicht 12 versehen. Der Anwendungsfall dieses Trägers 1 ist in Figur 13 in Anlehnung an die Ausführungsform nach der Figur 5 dargestellt. Wie in der Figur 13 veranschaulicht ist, ist der verlängerte Abschnitt 20 aus der Ebene der Abschnittsteile 7 und 8 in Richtung des oberen Endes des zugeordneten Regalbodens 14 geknickt und im Bereich des Endes des Abschnittes 21 nochmals geknickt, so dass dieser Endabschnitt 21 mit dem oberen Ende des ersten Abschnittes 10, der am Regalboden 14 befestigt ist, verklebt wird. Hierdurch ist der zweite Abschnitt 11 bezüglich des ersten Abschnittes 10 fixiert. Dies erlaubt es, eine kürzere Tafel 13 mittels eines Trägers 1 zu befestigen, somit an einem einzigen Regalboden 14 zu befestigen.

## Patentansprüche

1. Träger (1) für zwei miteinander zu verbindende Teile (13, 14), mit folgenden Merkmalen:
- einen ersten flachen Abschnitt (10) zur Befestigung mit einem (14) der beiden Teile (13, 14),
- einen zweiten, aus der Ebene des flachen Abschnitts (10) ragenden Abschnitt (11), der zueinander abgewinkelte Abschnittsteile (7, 8, 9; 8, 9) aufweist, zur Befestigung mit dem anderen (13) der beiden Teile (13, 14),
- eine flexible Verbindung (5) zwischen dem ersten Abschnitt (10) und einem Abschnittsteil (9) des zweiten Abschnitts (11).

2. Träger nach Anspruch 1, wobei der zweite Abschnitt (11) aus einem flachen Gebilde gebildet ist.

3. Träger nach Anspruch 1 oder 2, der einstückig ist.

4. Träger nach einem der Ansprüche 1 bis 3, der aus Kunststoff, Folie, Gummi, Kautschuk, Holz, einem Papierprodukt oder Metall besteht.

5. Träger nach einem der Ansprüche 1 bis 4, der mit Mitteln 12) zum Befestigen der Abschnitte (10, 11) versehen ist, die insbesondere als Kleber (12), Haftmittel, Klettverbindung, Magnetbeschichtung ausgebildet ist, oder der Träger (1) das Mittel zum Befestigen umfasst, insbesondere als Klettgewebe ausgebildet ist.

6. Träger nach einem der Ansprüche 1 bis 5, wobei der zweite Abschnitt (11) drei in Form eines U abgewinkelte Abschnittsteile (7, 8, 9) aufweist, wobei das die äußeren Abschnittsteile (7, 8) verbindende Abschnittsteil (9) mit dem ersten Abschnitt (10) verbunden ist.

7. Träger nach Anspruch 5 oder 6, wobei, bezogen auf eine ebene Ausgangsstellung der beiden Abschnitte (10, 11), diese auf derselben Fläche mit dem Mittel (12) zum Befestigen der Abschnitte (10, 11) versehen sind.

8. Träger nach einem der Ansprüche 1 bis 7, der aus einer ebenen Platte gebildet ist, wobei die Platte eine Faltkante (5) zum Erzeugen der beiden Abschnitte (10, 11) und mindestens eine unter einem Winkel zur Faltkante (5) angeordnete Faltkante (6) zum Bilden der Abschnittsteile (7, 8, 9; 8, 9) des zweiten Abschnitts (11) aufweist, wobei einer der Abschnittsteile (9) mit dem ersten Abschnitt (10) verbunden ist.

9. Befestigungssystem zum Anbringen eines ersten Teils (13), insbesondere einer Tafel (13), unter einem Winkel an einem zweiten Teil (14), insbesondere an mindestens einem Regalboden (14), unter Verwendung mindestens eines Trägers (1) gemäß der Merkmale der Patentansprüche 1 bis 8.

10. Befestigungssystem nach Anspruch 9, wobei die beiden Teile (13, 14) unter einem rechten Winkel zueinander angeordnet sind.

11. Befestigungssystem nach Anspruch 9 oder 10, wobei der erste Abschnitt (10) mit dem zweiten Teil (14), insbesondere dem Regalboden (14), verbunden ist, und der zweite Abschnitt (11) mit dem ersten Teil (13), insbesondere der Tafel (13), verbunden ist.

12. Befestigungssystem nach Anspruch 11, wobei der zweite Abschnitt (11) drei Abschnittsteile (7, 8, 9) aufweist, sowie zwei Abschnittsteile (7, 8) auf abgewandten Seiten des ersten Teils (13), insbesondere der Tafel (13), und das zwischen den beiden Abschnittsteilen (7, 8) angeordnete Abschnittsteil (9) mit der Stirnseite (16) des ersten Teils (13), insbesondere der Tafel (13), verbunden ist.
